## Europäisches Patentamt

## European Patent Office

## Office européen des brevets

(19)

(11) Veröffentlichungsnummer: **0 190 376**
**B1**

(12) **EUROPÄISCHE PATENTSCHRIFT**

(45) Veröffentlichungstag der Patentschrift:
**11.05.88**

(21) Anmeldenummer: **85101146.0**

(22) Anmeldetag: **04.02.85**

(51) Int. Cl.⁴: **B 60 B 33/00, F 16 B 2/12**

(54) Halterung von Rollen, insbesondere Lenkrollen, am Fahrgestell eines Wagens.

(43) Veröffentlichungstag der Anmeldung:
**13.08.86 Patentblatt 86/33**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
**BE - A - 488 494**
**CH - A - 445 952**
**FR - A - 625 788**
**FR - A - 1 480 361**
**GB - A - 809 393**
**GB - A - 1 136 757**
**US - A - 1 346 641**

(73) Patentinhaber: **TENTE-ROLLEN GmbH & Co.,
Herlinghausen 75, D-5632 Wermelskirchen 1 (DE)**

(72) Erfinder: **Hellwig, Hans-Jörg, Auf der Krone 8,
D-4000 Düsseldorf 34 (DE)**
Erfinder: **Neumann, Manfred, Hölterhofer Strasse 14,
D-5608 Radevormwald (DE)**

(74) Vertreter: **Rieder, Hans-Joachim, Dr.,
Corneliusstrasse 45 Postfach 11 04 51,
D-5600 Wuppertal 11 (DE)**

ACTORUM AG

## Beschreibung

Die Erfindung betrifft eine Halterung von Rollen gemäss Oberbegriff des Hauptanspruches.

Bei den bekannten Lösungen dieser Art (US-PS 1 346 641) sind die Pratzen gebildet von den Schenkeln eines U-förmigen Backenteiles. Im U-Innenraum liegt der Fahrgestellholm. Der Zapfen durchsetzt Löcher dieser Pratzen derart, dass sich der Fahrgestellholm zwischen U-Steg und dem Zapfen erstreckt. Der Zapfen dreht sich mit dem Rollengabelkopf. Er verrastet an einer aus der oberen Pratze ausgebogenen Zunge, welche in eine die Drehung des Zapfens erlaubende Ringnut auf der Zapfenmantelfläche einschnappt. Eine sichere, wackelfreie Befestigung lässt sich nur bei äusserst hoher Präzision der Bauteile erreichen. Das zur Drehbarkeit des Zapfens notwendige Spiel beeinträchtigt eine starre Befestigung wieder. Eine einigermassen wackelfeste Verbindung lässt sich überhaupt nur in der offenen Ecke des Fahrgestellholmes erreichen.

Dem Gegenstand der Erfindung liegt die Aufgabe zugrunde, eine gattungsgemässe Halterung so auszugestalten, dass neben einem vereinfachten Aufbau die Montage der Halterung an dem Fahrgestell erleichtert ist.

Gelöst wird diese Aufgabe durch das Kennzeichen des Anspruchs 1.

Die Unteransprüche betreffen vorteilhafte Weiterbildungen des Gegenstands des Anspruchs 1.

Zufolge derartiger Ausgestaltung ist eine Halterung der vorausgesetzten Art von vereinfachtem und daher kostengünstiger zu erstellendem Aufbau angegeben. Das vom Rollengabelkopf ausgehende Befestigungsteil ist gleichzeitig Spannzapfen, so dass dieser demgemäss eine Doppelfunktion erfüllt. Die von dem Spannzapfen getragenen Pratzen können ohne Demontage der Halterung in umklammernde Stellung zu den Fahrgestell-Längsholmen gebracht werden. Dann wird durch entsprechende Spannzapfen-Verspannung die feste Umklammerung erzeugt, die wegen der Umklammerung der zwei Fahrgestell-Längsholme auch verdrehsicher ist ungeachtet wie hoch die Spannkraft ist. Diese Massnahme lässt es zu, Rollengabelkopf nebst Spannzapfen und Pratzen als vormontierte Baueinheit anzuliefern und ohne Demontage an das Fahrgestell anzusetzen, was eine erhebliche Zeiteinsparung mit sich bringt. Auch entstehen lagerungstechnische Vorteile dadurch. Bei Herstellung der Verspannung bildet der Spannzapfen das Widerlager für die Fahrgestell-Längsholme während die Pratzen ausfüllend zwischen die beiden vertikalen Fahrgestellholme eingreifen unter Erzielung eines insgesamt festen Sitzes des Rollengabelkopfes am Fahrgestell. Handelt es sich um Lenkrollen, so kann der Spannzapfen gleichzeitig die Drehachse des Rollengabelkopfes bilden unter Einsparung von Bauteilen. Es ist möglich, dass der Spannzapfen an seinem freien Ende ein Gewinde besitzt, auf welches die entsprechende Mutter aufgeschraubt wird, die die Pratzenverspannung herbeiführt. Eine andere Lösung zeichnet sich dadurch aus, dass der Spannzapfen vom Rollengabelkopf-Inneren her drehbar ist und die obere Pratze im Gewindeeingriff zum Spannzapfen steht. In diesem Fall entfällt eine gesonderte Mutter, da das entsprechende Gewinde von der oberen Pratze selbst ausgebildet wird. Sodann besteht eine vorteilhafte Bauform darin, die Pratze fest mit einer vom Spannzapfen durchsetzten Büchse zu verbinden. Diese Verbindung kann auf unterschiedliche Art und Weise erfolgen. Beispielsweise durch Formschluss und Vernietung. Ferner ist es möglich, die Pratze mit der Büchse zu verschweissen. Es stützt sich dann der Spannzapfen über die Büchsen an den Fahrgestell-Längsholmen ab. Bei Einsatz einer Büchse bietet es sich an, die obere Büchse mit einem Innengewinde zum Einschrauben des Spannzapfens zu versehen. Schliesslich ist es noch bei allen Bauformen der Pratzen günstig, wenn der umklammernde Abschnitt der Pratze spitzwinklig verläuft zur Flanke des Spannzapfens. Wird die Verspannung herbeigeführt, so bewirkt der spitzwinklig ausgerichtete Abschnitt der Pratze ein Verspannen des Spannzapfens bzw. der Büchsen gegen die Fahrgestell-Längsholme.

Nachstehend werden sechs Ausführungsbeispiele der Erfindung anhand der Fig. 1 bis 17 erläutert. Es zeigt:

Fig. 1 eine teilweise Ansicht des Fahrgestells eines Einkaufwagens mit der Halterung gemäss der ersten Ausführungsform,

Fig. 2 in etwa natürlicher Grösse einen Ausschnitt II der Fig. 1, wobei die Halterung strichpunktiert veranschaulicht ist,

Fig. 3 eine klappfigürliche Ansicht der Fig. 2,

Fig. 4 eine Seitenansicht der Lenkrolle mit Halterung,

Fig. 5 in Einzeldarstellung eine Ansicht einer Pratze,

Fig. 6 die Seitenansicht dieser Pratze,

Fig. 7 die Draufsicht auf die Pratze,

Fig. 8 eine Darstellung der Halterung gemäss der zweiten Ausführungsform,

Fig. 9 eine Draufsicht auf Fig. 8,

Fig. 10 eine Darstellung der Halterung gemäss der dritten Ausführungsform,

Fig. 11 die Draufsicht auf Fig. 10,

Fig. 12 eine Darstellung der Halterung entsprechend der vierten Ausführungsform,

Fig. 13 die Draufsicht auf Fig. 12,

Fig. 14 teils in Ansicht, teils im Schnitt die Halterung gemäss der fünften Ausführungsform,

Fig. 15 die Draufsicht auf Fig. 14,

Fig. 16 ebenfalls teilweise in Ansicht, teilweise im Schnitt die Halterung gemäss der sechsten Ausführungsform und

Fig. 17 die Draufsicht auf Fig. 16.

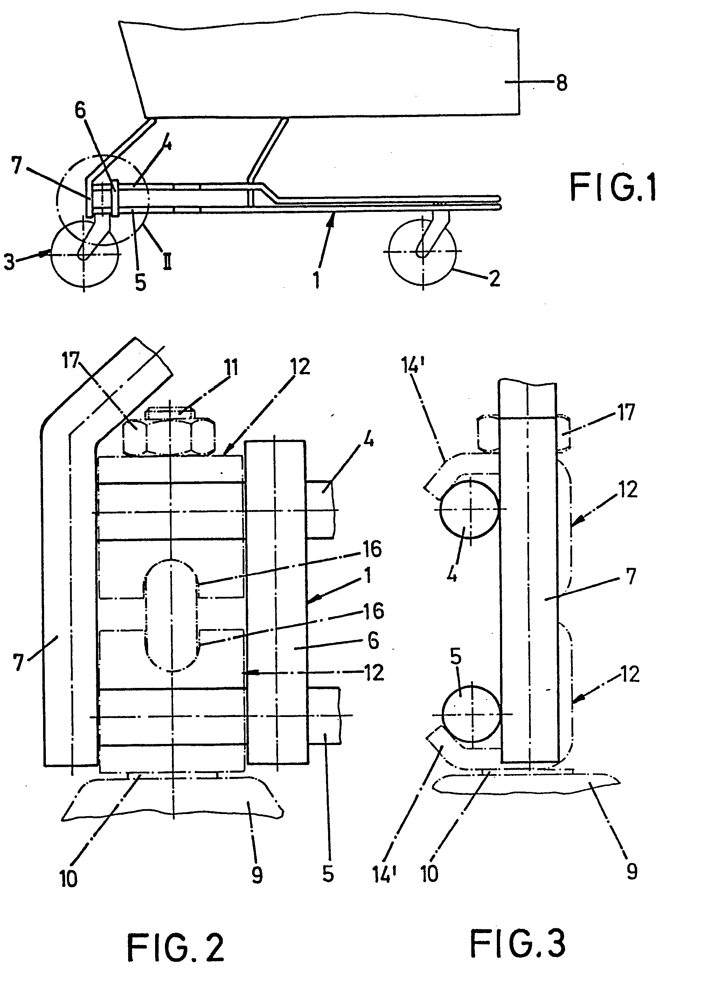

Das in Fig. 1 dargestellte Fahrgestell 1 ist Bestandteil eines Einkaufswagens. Bezüglich der beiden vorderen Rollen handelt es sich um am Fahrgestell montierte Bockrollen 2. Die beiden hinteren Rollen sind als Lenkrollen 3 ausgebildet. Im befestigungsseitigen Bereich für diese Lenkrollen 3 bildet das Fahrgestell 1 zwei horizontal verlaufende Fahrgestell-Längsholme 4, 5 aus, die am rückwärtigen Ende durch zwei quergerichtete Fahrgestellholme 6, 7 miteinander verbunden sind. Der Fahrgestellholm 6 entspricht in seiner Länge etwa dem Abstand der Fahrgestell-Längsholme 4, 5 zueinander, während der endseitige Fahrgestellholm 7 über eine Abknickung schräg aufwärts gerichtet verläuft und dort mit zur Halterung des Korbes 8 des Einkaufswagen dient.

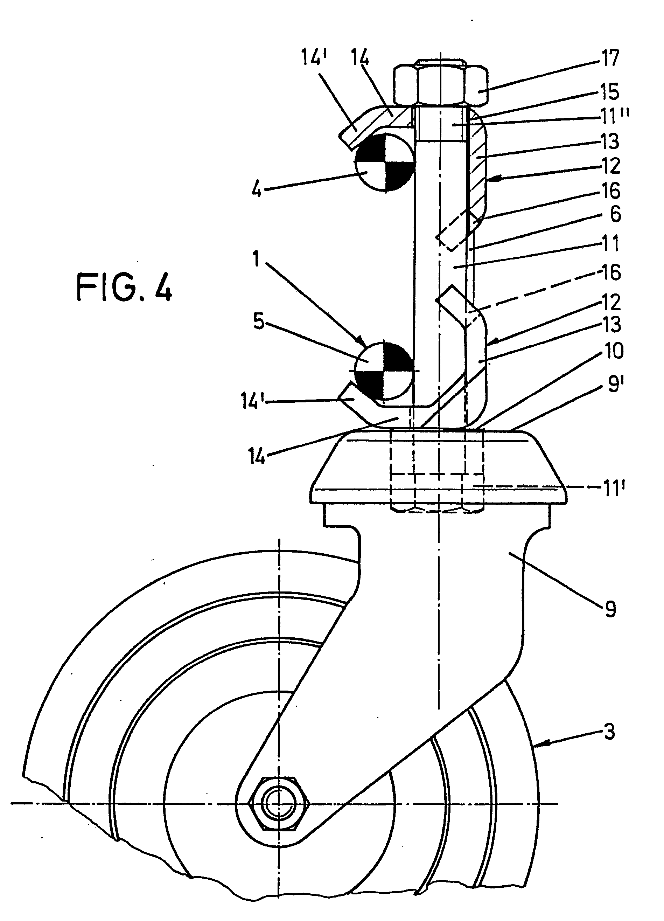

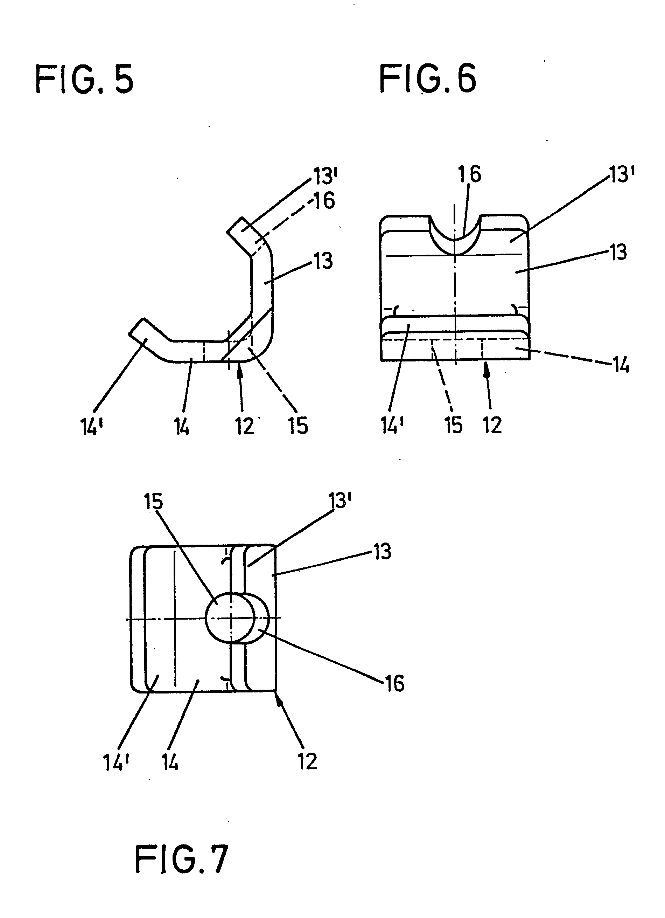

Gemäss der ersten Ausführungsform, dargestellt in den Fig. 1 bis 7, besitzt die Lenkrolle 3 einen Rollengabelkopf 9. Dieser trägt drehbar in seinem oberen Bereich eine seine horizontale Stirnfläche 9' überragende Büchse 10, welche von einem Spannzapfen 11 durchsetzt wird. Letzterer ist als Schraube ausgebildet, wobei sich der Schraubenkopf 11' am innenseitigen Stirnrand der Büchse 10 abstützt. Das freie Ende des Spannzapfens 11 ist mit einem Aussengewinde 11'' versehen. Die Länge des Spannzapfens 11 ist so gross, dass er den oberen Fahrzeug-Längsholm 4 um ein gewisses Mass überragt.

Auf dem Spannzapfen 11 sitzen zwei einander gleichgestaltete Pratzen 12. Jede dieser Pratzen ist winkelförmig gestaltet und setzt sich aus den Winkelschenkeln 13 und 14 zusamen. In dem Winkelschenkel 14 befindet sich eine Durchtrittsbohrung 15 für den Spannzapfen 11. Der Winkelschenkel 13 ist endseitig in Einwärtsrichtung abgewinkelt. Der entsprechende Abschnitt 13' enthält mittig eine dem Durchmesser des Spannzapfens 11 angepasste Aussparung 16, in welche der Spannzapfen 11 mit einem Teil seines Umfanges eingreift. Der andere Winkelschenkel 14 besitzt ebenfalls einen einwärts abgewinkelten Abschnitt 14'. Dieser verläuft bei aufgesetzter Pratze spitzwinklig zur Flanke des Spannzapfens 11.

Rollengabelkopf 9, Spannzapfen 11 mit den darauf angeordneten Pratzen 12 und eine dem Spannzapfen 11 zugeordnete Mutter 17 können zu einer vormontierten Einheit zusammengesetzt werden. Die Mutter 17 befindet sich in einer solchen Stellung auf dem Gewinde 11'' des Spannzapfens, so dass die Pratzen 12 mit ihren Abschnitten 14' die Fahrgestell-Längsholme 4, 5 umklammern können. Dann ist die Mutter 17 anzuziehen. Hierbei werden die umklammernden Abschnitte 14' der Pratzen 12 gegen die Fahrgestell-Längsholme 4, 5 verspannt derart, dass sich die untere Pratze 12 mit ihrem Winkelschenkel 14 an der Büchse 10 abstützt. Zufolge der spitzwinklig verlaufenden Abschnitte 14' wird eine Kraftkomponente erzeugt, welche zu einem Anziehen des Spannzapfens 11 gegen die Fahrgestell-Längsholme 4, 5 führt.

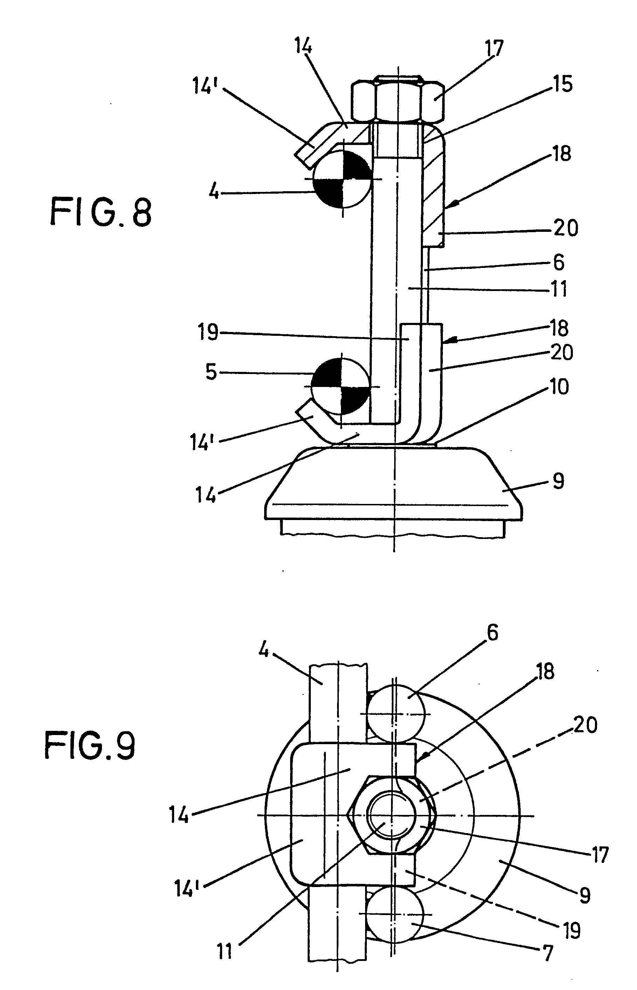

Bei der in Fig. 8 und 9 gezeigten zweiten Ausführungsform tragen gleiche Bauteile gleiche Bezugsziffern. Die Pratzen 18 sind nun abweichend gestaltet. Sie besitzen jedoch ebenfalls eine Winkelform, wobei der Winkelschenkel 14 die entsprechende Durchtrittsbohrung 15 ausbildet. Jedoch ist der andere Winkelschenkel 19 anders gestaltet. Parallel zur Längsachse des Spannzapfens 11 formt er eine Ausbuchtung 20, in welcher der Spannzapfen 11 mit einem Teil seines Umfanges einliegt. Die Verspannung erfolgt in äquivalenter Weise.

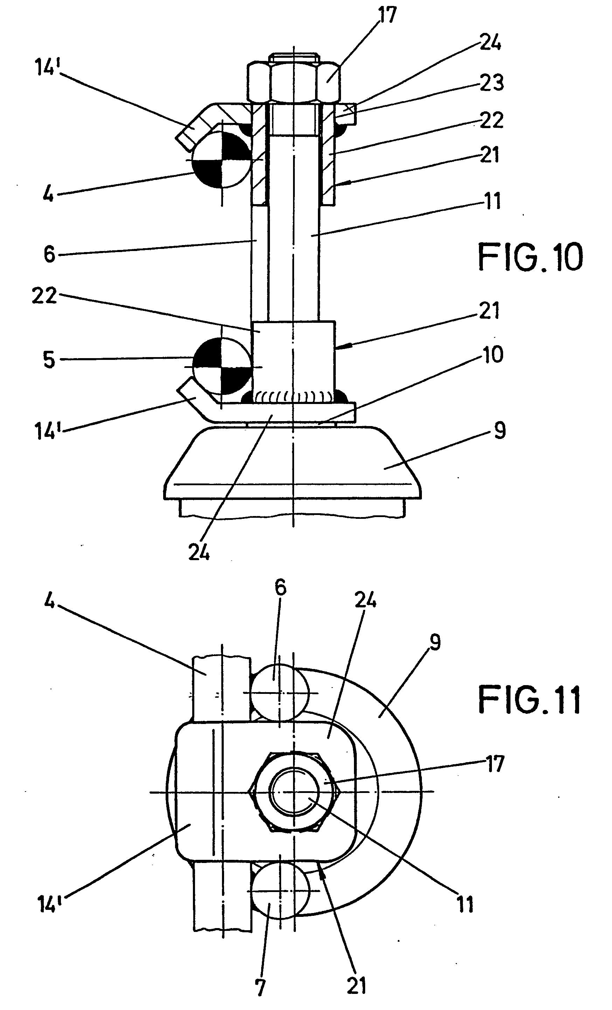

Gemäss der dritten Ausführungsform, dargestellt in den Fig. 10 und 11, sind die Pratzen 21 ebenfalls abweichend gestaltet. Die Pratzen 21 sind untereinander formgleich ausgebildet. Jede Pratze 21 weist eine vom Spannzapfen 11 durchsetzte Büchse 22 auf. Diese durchgreift eine querschnittsangepasse Bohrung 23 eines Pratzenschenkels 24, welcher endständig den Abschnitt 14' ausbildet, der, wie bei den vorerwähnten Ausführungsformen, spitzwinklig verläuft zur Flanke des Spannzapfens 11. Auch bei dieser Ausführungsform erfolgt die Verspannung in ähnlicher Weise. Jedoch stützt sich der Spannzapfen 11 über die Büchsen 22 an den Fahrgestell-Längsholmen 4, 5 ab. Die Pratzen 21 werden so auf dem Spannzapfen 11 angeordnet, dass die Büchsen 22 einander zugekehrt sind.

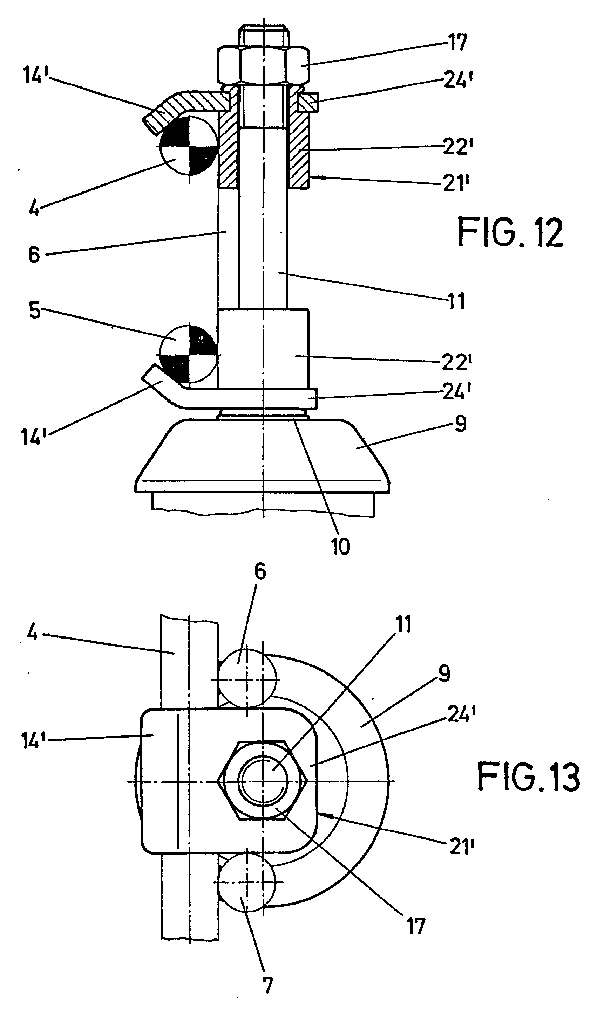

Die in den Fig. 12 und 13 aufgezeigte vierte Ausführungsform entspricht weitgehend der in den Fig. 10 und 11 beschriebenen dritten Ausführungsform. Die Pratzenschenkel 24' der Pratzen 21' sind formschlüssig mit den Büchsen 22' verbunden. Zu diesem Zweck ist das dem Pratzenschenkel 24' zugekehrte Ende der Büchse 22' vernietet.

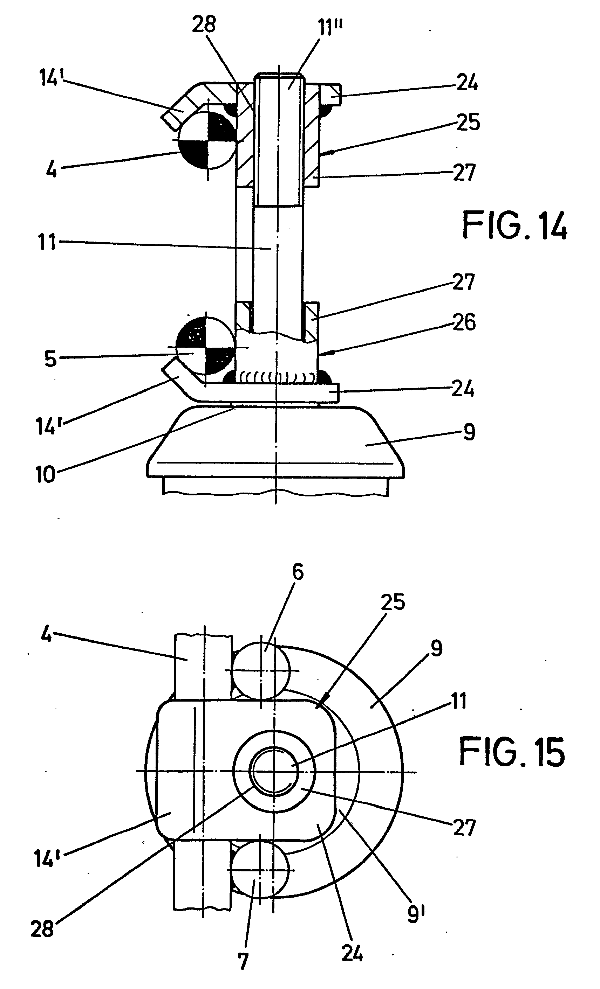

Gemäss der fünften Ausführungsform, dargestellt in den Fig. 14 und 15, setzt sich jede Pratze 25, 26 aus einer Büchse 27 und einem mit dieser verschweissten Pratzenschenkel 24 zusammen. Die obere Pratze 25 unterscheidet sich von der unteren Pratze 26 dadurch, dass die Büchse 27 ein Innengewinde 28 ausbildet zum Einschrauben des Spannzapfens 11. Bei dieser Ausführungsform kann daher eine Mutter 17 entfallen. Die Verschraubung erfolgt vom Lenkgabelkopf-Inneren her. Auch bei dieser Ausführungsform ist eine Montage der vormontierten Einheit möglich, ohne die Pratzen 25, 26 vom Spannzapfen 11 abnehmen zu müssen.

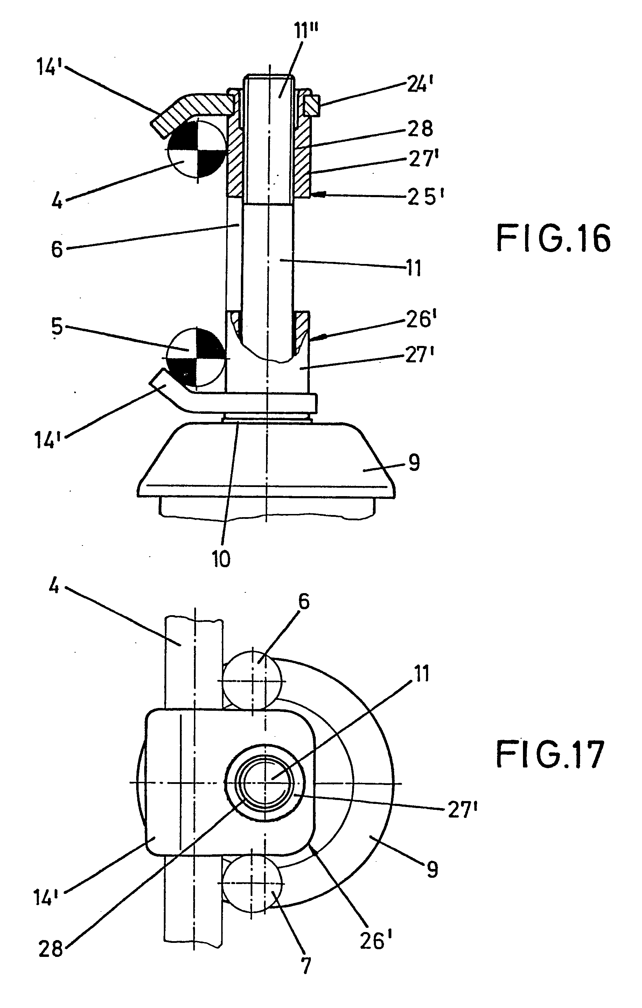

Die in den Fig. 16 und 17 veranschaulichte sechste Ausführungsform entspricht in ihrem Aufbau der vorbeschriebenen Ausführungsform. Es sind dort die Pratzenschenkel 24' der Pratzen 25', 26' ebenfalls mit den Büchsen 27' vernietet. Die obere Büchse 27' enthält ebenfalls ein Innengewinde 28, welches in Eingriff tritt mit dem Gewinde 11'' des Spannzapfens 11. Die Verspannung der Halterung wird ebenfalls in äquivalenter Weise durchgeführt, wobei sich der Spannzapfen 11 über die Büchsen 27' an den Fahrgestell-Längsholmen 4, 5 abstützt.

**Patentansprüche**

1. Halterung von Rollen, insbesondere Lenkrollen (3) am Fahrgestell (1) eines Wagens, insbesondere Einkaufswagens, bei welcher ein oberhalb des Rollengabelkopfes (9) liegender Zapfen (11) über Bakken mit einem Fahrgestellholm verbundenist, welche Backen als den Fahrgestellholm umklammernde Pratzen (12, 18, 21, 21', 25, 25', 26, 26') gestaltet sind, dadurch gekennzeichnet, dass der Zapfen (11) als mindestens zwei Pratzen (12, 18, 21, 21', 25, 25', 26, 26') gegen mindestens zwei Fahrgestell-Längsholme (4, 5) verspannender Spannzapfen (11) gestaltet ist, welcher das Widerlager für die Fahrgestell-Längsholme (4, 5) bildet, wobei der umklammernde Abschnitt der Pratzen (12, 18, 21, 21', 25, 25', 26, 26') spitzwinklig zur Flanke des Spannzapfens (11) verläuft.

2. Halterung nach Anspruch 1, dadurch gekennzeichnet, dass der Spannzapfen (11) vom Lenkgabelkopf-Inneren her drehbar ist und die obere Pratze (25, 25') im Gewindeeingriff zum Spannzapfen (11) steht.

3. Halterung nach Anspruch 2, dadurch gekennzeichnet, dass der umklammernde Abschnitt (14') der Pratze (25, 25') fest, z.B. formschlüssig, mit einer vom Spannzapfen (11) durchsetzten Büchse (22, 27 bzw. 22', 27') verbunden ist.

4. Halterung nach Anspruch 3, dadurch gekennzeichnet, dass die Büchse (27, 27') ein Innenngewinde (28) zum Einschrauben des Spannzapfens (11) trägt.

## Claims

1. Mounting for rollers, especially steering rollers (3), on the undercarriage (1) of a trolley, especially shopping trolley, in which a spindle (11), positioned above the roller forkhead (9), is connected via jaws with an undercarriage strut, the jaws being constructed in the shape of claws (12, 18, 21, 21', 25, 25', 26, 26') embracing the undercarriage strut, characterised in that the spindle (11) is constructed to be a truing-up trunnion (11) for bracing at least two claws (12, 18, 21, 21', 25, 25', 26, 26') against at least two longitudinal struts (4, 5) of the undercarriage, the truing-up trunnion (11) forming the abutment for the longitudinal struts (4, 5) of the undercarriage, in which the embracing section of the claws (12, 18, 21, 21', 25, 25', 26, 26') runs at an acute angle to the side of the truing-up trunnion (11).

2. Mounting according to claim 1, characterised in that the truing-up trunnion (11) is rotatable from inside the steering forkhead and the upper claw (25, 25') is in thread engagement with the truing-up trunnion (11).

3. Mounting according to claim 2, characterised in that the embracing section (14') of the claw (25, 25') is rigidly connected with a bush (22, 27 or 22', 27') penetrated by the truing-up trunnion (11), e.g. in a positive-locking manner.

4. Mounting according to claim 3, characterised in that the bush (27, 27') carries an internal thread (28) for screwing in the truing-up trunnion (11).

## Revendications

1. Fixation de roulettes, en particulier de roulettes orientables (3), sur le chassis (1) d'un véhicule, en particulier d'un caddie de supermarché, dans laquelle une broche (11) située au-dessus de la tête (9) de fourchette de roulette est reliée par des mâchoires à un longeron du chassis, ces mâchoires étant réalisées sous la forme de griffes (12, 18, 21, 21', 25, 25', 26, 26') enserrant le longeron de chassis, caractérisée en ce que la broche (11) est réalisée sous la forme d'une broche de serrage (11) venant serrer au moins deux griffes (12, 18, 21, 21', 25, 25', 26, 26') contre au moins deux longerons longitudinaux de chassis (4, 5), cette broche constituant le contre-appui pour ces longerons longitudinaux de chassis (4, 5) et la partie de serrage des griffes (12, 18, 21, 21', 25, 25', 26, 26') étant disposée à angle aigu par rapport au flanc de la broche de serrage (11).

2. Fixation selon la revendication 1, caractérisée en ce que la broche de serrage (11) est susceptible de tourner à l'intérieur de la tête de fourchette d'orientation et en ce que la griffe supérieure (25, 25') est reliée par filetage à la broche de serrage (11).

3. Fixation selon la revendication 2, caractérisée en ce que la partie de serrage (14') de la griffe (25, 25') est reliée rigidement, par exemple par conjugaison de formes, à un manchon (22, 27 ou 22', 27') traversé par la broche de serrage (11).

4. Fixation selon la revendication 3, caractérisée en ce que le manchon (22, 27) comporte un filetage intérieur (28) destiné au vissage de la broche de serrage (11).

FIG.1

FIG. 2

FIG.3

FIG. 4

# FIG. 5

# FIG. 6

# FIG. 7

FIG. 8

FIG. 9

FIG.10

FIG.11

FIG. 12

FIG. 13

FIG. 14

FIG. 15

FIG.16

FIG.17